# EUROPEAN PATENT SPECIFICATION

(11) **EP 1 621 061 B1**
(45) Date of publication and mention of the grant of the patent: **25.04.2007**
(21) Application number: 05076765.6
(22) Date of filing: 29.07.2005
(51) Int. Cl.: A01D 45/00, A01G 5/00

(54) **Harvesting device**
Erntevorrichtung
Dispositif de récolte

(30) Priority: 30.07.2004 NL 1026753
(43) Date of publication of application: 01.02.2006
(73) Proprietor: Iso Groep Machinebouw BV, 5311 PC Gameren (NL)
(72) Inventor: Poortvliet, Dirk Marinus, 4264 ST Veen (NL); De Koning, Dick, 4261 DA Wijk en Aalburg (NL); Crielaard, Wim, 5308 JX Aalst (NL); Struijk, Wim, 5316 BG Delwijnen (NL); Van de Wetetering, Aart, 4261 AA Wijk en Aalburg (NL); Van Gammeren, Corné, 4264 RJ Veen (NL); Hoekstra, Wouter, 2515 AR s'Gravenhage (NL)
(74) Representative: Clarkson, Paul Magnus

(56) References cited:
- NL-A- 9 301 495
- NL-C2- 1 022 951
- US-B1- 6 243 987

## Description

The present invention concerns a harvesting device, in particular a device for harvesting long-stemmed crops, such as ornamental flowers that are supported by supporting means. The invention also relates to a gripper and to a method for the automated harvesting of crops.

In general, harvesting devices are known for harvesting crops such as wheat or grass. With such devices crops are first cut or mowed and/or deposited on the ground or immediately formed into bundles or bales. Similar devices and methods may also be used for certain flowers to cut and bundle them.

Certain long-stemmed crops, such as ornamental flowers, need supporting means to be able to grow upright, or to keep the stems at a distance from each other. With such supported crops, the use of known harvesting devices is impossible. Hence, this sector of the horticultural industry is characterized by considerable manual labour, whereby the plants must be disconnected one by one from the supporting means and harvested. In the following, reference to long-stemmed crops is intended to refer to plants that need supporting means to be able to grow upright, or that need special means for gripping, to prevent breaking of the stem.

With the cultivation of chrysanthemums and similar flowers, nowadays the plants are planted in beds under a steel wire mesh. One single bed may be more than 100 meter long and may have a content of more than 11,000 plants. The plants grow through the wire mesh and the wire mesh is moved upwards together with the plants to be able to support the plants during their growth. At the moment of harvesting the wire mesh is located below the flower heads at a distance of 40 to 60 cm above the ground or above the cultivation medium. According to current methods of harvesting, the stems are cut underneath the wire mesh, while a worker grasps the flowers from above and pulls them out of the wire mesh. An automated mowing machine is known from the Dutch Patent No. 1005719, which travels at walking speed underneath the wire mesh and cuts the stems. Hitherto, no devices are known that offer a solution for harvesting cut plants.

From the Dutch Patent Application No. 9301495, a harvesting device for chrysanthemums is known with a cutting element that is attached to an elongated arm. The arm further carries a transport instrument that grips the underside of a stem and pulls the chrysanthemum out from under the wire mesh. Because the flower head is pulled through the wire mesh, damage to the plant may arise. The above-mentioned harvesting device is also unsuitable for other forms of supporting means, e.g. those where the flower head is not able to pass through the supporting means.

An automated system for planting and harvesting of plants is also known from the patent publication US 6,243,987. In this system flower boxes are transported alongside a processing zone where a robot is present. The robot takes care of the transfer of the plants from the flower boxes to a chopper where the roots are chopped off. This system is apparently not suitable for long-stemmed crops that are difficult to transport to a harvesting device and need extra support to prevent damage to the stem.

The present invention overcomes these objections by providing a device for harvesting a long-stemmed crop that is supported at the stem by supporting means. The device comprises a gripper for gripping the stem above the supporting means, and lifting means for pulling the crop upwards by means of the gripper, through the supporting means over essentially its supported length. The crop may be pulled upwards in such a way that the total stem to be used is located above the supporting means. Depending on the path of motion of the grip- and lift mechanism, the crop may be pulled upwards along a partly inclined or curved path. Preferably, the path of motion is a continuous cyclical movement.

According to an important feature of the invention, the device comprises centering means for centering the gripper and/or the stem relative to an opening in the supporting means. In this way it is an opening in possible to prevent damage to the crop which arises, e.g. when the stem is pulled upwards along the supporting means. In a preferred embodiment, the centering means comprises a sliding element. The sliding element and the gripper are adjustable relative to each other to center the stem or the gripper. The centering means may be pulled upwards together with the crop and the gripper, or may be an element of a feeler part of the device that moves above the supporting means between the stems. It is also possible to center the stem or the crop underneath the supporting means. This may be done by a component of the harvesting device itself and/or by another device, such as a cutting device.

The rotating, tilting or otherwise manipulating of the crop is a delicate treatment that may determine the processing rate of the automation process. In particular with long-stemmed ornamental flowers, the consequence may be that the stem may break because of the long stem and the relative heavy weight of the flower head. According to another feature of the invention, the gripper may be designed in such a way that it supports the stem over a sufficient grip length in order to avoid breaking or damaging of the stem during a change in orientation of the crop. In this context, grip length is intended to denote a length, such that a crop that is supported only over this grip length, may be manipulated without damage. To avoid such damage, preferably the tilting means comprises a holder for maintaining the stem above the supporting means at a distance of the gripping element.

To achieve sufficient grip length, the gripper may comprise a number of gripping elements that grip or support the stem of the crop over the grip length. For chrysanthemums a grip length of about 15 cm is sufficient. A preferable embodiment of the gripper is provided with gripping fingers that support the stem in an elastic manner. The gripping fingers may than be movable relative to each other to grip a stem. By using elastic gripping fmgers, for the same support at the stem a shorter grip length is needed to avoid breaking. A gripper with a number of gripping fingers that grip the stem in an elastic manner represents another embodiment of the invention. With such a gripper a grip length of about 10 cm may already be sufficient to manipulate chrysanthemums and similar plants with a stem length up to 80 cm. Evidently, for shorter plants a shorter grip length may of course be applied.

The device according to the present invention may also be provided with tilting means for tilting the crop from one orientation to another. The harvested crop may hereby be deposited on a conveyer belt or any other transport device. The tilting means preferably comprises a device for rotating the gripper around an essentially horizontal axis. When implementing the harvesting device with robot arms, first and second gripping elements may be mounted on respectively first and second robot arms that are movable relative to each other, that are e.g. pivotable as a whole around an axis.

The harvesting device according to the invention preferably cooperates with a cutting device for cutting the stem of the crop. The cutting device may be a part of the harvesting device, or may be independent thereof. According to one embodiment the crop is first pulled upwards and subsequently cut, whereby the cutting device is positioned above the supporting means and the stem is cut at a distance from the gripping element. This embodiment is economic in those cases where the crop is easily pulled upwards together with its roots from the cultivation medium. After chopping off the roots, these fall back on the cultivation medium.

In a preferred embodiment, the cutting device is positioned underneath the supporting means. The stem is e.g. cut directly above the ground before the crop is pulled upwards. In this case, a communication unit may provide the communication between the harvesting device and the cutting device. The harvesting device and the cutting device may operate as a coupled unit through the supporting means using an infrared connection. In this way, it is ensured that both elements are directed to the stem of the same plant.

For the essentially full-automated harvesting of the crop, the harvesting device may be further provided with driving means, such that the device is mobile. The driving means may comprise wheels, gearwheels, cableway and the like to guide the device along a number of plants. Because the height of the crop and the supporting means may vary, the height of the device relative to the ground is preferably adjustable by, e.g. providing the device with a guidance system for the adjustable-height guidance of at least one grip element. The supporting means may also be part of the guidance system; for example, in such cases that the supporting means comprises a mesh wire adjustable in height, the device may be guided along the mesh wire. It is also known to have heating pipes move upwards together with the crop. These heating pipes may also be used as a guidance system for the harvesting device.

In an especially preferred embodiment of the invention, the harvesting device is provided with a number of grippers for the simultaneous harvesting of a number of crops. The gripped crops are then preferably pulled upwards simultaneously and may be tilted as a whole to be deposited on a conveyer belt or a similar device.

A number of examples of the invention are further illustrated according to the following drawings, in which:
Figure 1 shows a schematic side-view of a device according to the invention engaged in gripping and cutting a crop;
Figure 2 shows a schematic side-view of the device according to Figure 1 engaged in pulling upwards of the crop;
Figure 3 shows a schematic side-view of the device according to Figure 1 engaged in depositing the crop on a conveyer belt;
Figure 4 shows a schematic side-view of an alternative embodiment of the invention;
Figure 5 shows a top-view of a second alternative embodiment of the invention with a plurality of gripping elements;
Figure 6 shows a detail of a gripping element in closed position according to an aspect of the current invention;
Figure 7 shows a detail of a gripping element of Figure 6 in the gripping position;
Figure 8 shows a schematic side-view of a third alternative embodiment of the invention;
Figure 9a shows a top-view of feeler and gripping parts of the third embodiment;
Figure 9b shows a side-view of the feeler and gripping parts of Figure 9a ;
Figure 10 shows a schematic side-view of the third alternative embodiment during the gripping of a crop;
Figure 11a to 11e show top-views of the feeler and gripping parts in different positions during the harvesting of a crop;
Figure 12 shows a schematic side-view of the third alternative embodiment during the lifting of a crop;
Figure 13 shows a schematic side-view of the third alternative embodiment during the depositing of a crop on a conveyer belt;
Figure 14 shows a frontal view of the fourth embodiment; and
Figure 15 shows a cross-section of the harvesting device according to Figure 14 along the plane **15-15.**

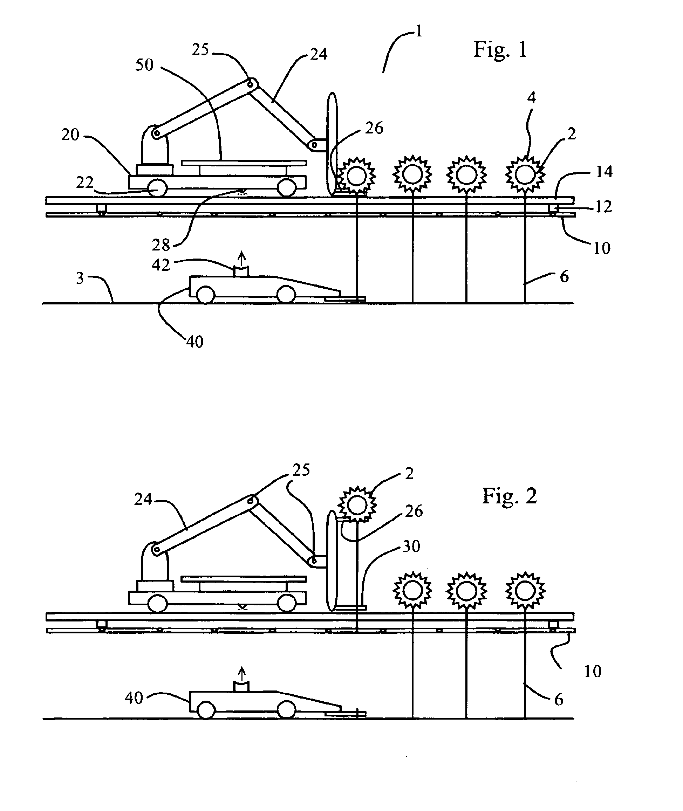

Figure 1 shows a device **1,** with which a number of chrysanthemum plants **2** are harvested. The plants **2** are planted according to a matrix in a number of rows in a bed **3** and grow through the mesh wire **10.** The mesh wire **10** has a square mesh opening of about 100 mm and may contain up to 13 plants in each row. Of course, other sizes of the mesh wire **10** are also possible. The mesh wire **10** is moved upwards during the growth to keep supporting the plants **2,** in particular the flowers **4** that are increasing in weight. The mesh wire **10** is supported by supports **12** that hang from beams (not shown) in the top of the greenhouse. Heating pipes **14** extend over the wire mesh **10** and are also supported by the supports **12.** In the following, the direction of the heating pipes is indicated as the longitudinal direction of the bed 3, while the supports **12** and the rows are positioned in the transverse direction of the bed 3.

A harvesting device **20,** equipped with wheels **22** travels along the heating pipes **14.** The weight of the harvesting device may also be carried from above by supports, which are not further described. The harvesting device **20** has a robot arm **24** that extends forwards and to which a gripping element **26** is attached. Robot arm **24** is provided with a number of universal joints **25** such that the gripping element may be rotated in any given direction. The gripping element **26** also comprises fingers that may grip the stem **6** of a plant **2** above the wire mesh **10** without damage.

A cutter **40** is located under the wire mesh **10.** The cutter **40** may be e.g. an automated mowing machine as is known from the Dutch Patent No. 1005719. The cutter **40** travels over the ground underneath the wire mesh **10** and cuts the stem 6 that is being held by the gripping element **26.** According to an important feature of the current invention, the harvesting device **20** and the cutter **40** are aligned to one another by means of a light signal. Photocells **28** on the harvesting device **20** emit signals that are reflected by the reflector strips **42** on the cutter **40.** In this way the harvesting device **20** can identify its own position relative to the cutter **40** and synchronize therewith. Of course, alternative communication and measuring methods may be applied, such as laser-Doppler measuring elements, microwave communication, ultrasound, etc. to align the harvesting device **20** and the cutter **40** with one another.

A conveyer belt **50** travels over the harvesting device **20** for further transporting the harvested plants **2.** In the embodiment of Figures 1 to 3, the conveyer belt is implemented as a part of the harvesting device **20** and travels as a whole over the heating pipes **14.** The conveyer belt **50** travels in the transversal direction to the bed. Of course, it is possible to utilize an independent conveyer belt above or alongside the harvesting device, or to provide the harvesting device with a box or the like in which the harvested plants may be deposited.

Figure 2 shows the device according to Figure 1 in a further harvesting stage. In this Figure and in the remaining description, similar elements will be denoted with similar numerals. In Figure 2 the cutter **40** has cut the stem **6** of a plant **2.** The plant **2,** gripped by the gripping element **26,** has been lifted straight up through the wire mesh **10** by the action of the robot arm **24.** The gripping element **26** needs to lift the plant **2** over such a distance that the cut stem **6** is positioned above the wire mesh **10.** This distance is equal to the distance between the wire mesh **10** and the cutting height of the cutter **40.** For plants that are cut close to the ground this distance is also equal to the height of the mesh wire. In the position as drawn in Figure 2 the stem 6 has not been completely pulled out of the wire mesh **10.**

From Figure 2 a second gripping element **30** may also be seen. The second gripping element **30** is located close above the wire mesh **10** and may be the same as the first gripping element **26,** or also a more simple embodiment that only e.g. supports the stem. In a first stage the second gripping element **30** is free from the stem **6,** or open, such that the plant **2** may be moved upwards without damage. This is effected by moving the first gripping element **26** upwards relative to the second gripping element **30.** After the robot arm **24** has moved upwards the gripping element **26,** the second gripping element **30** also grips the stem **6** in the vicinity of the cut bottom. By holding the stem **6** at two locations at a distance from each other, the plant **2** may be manipulated without damage.

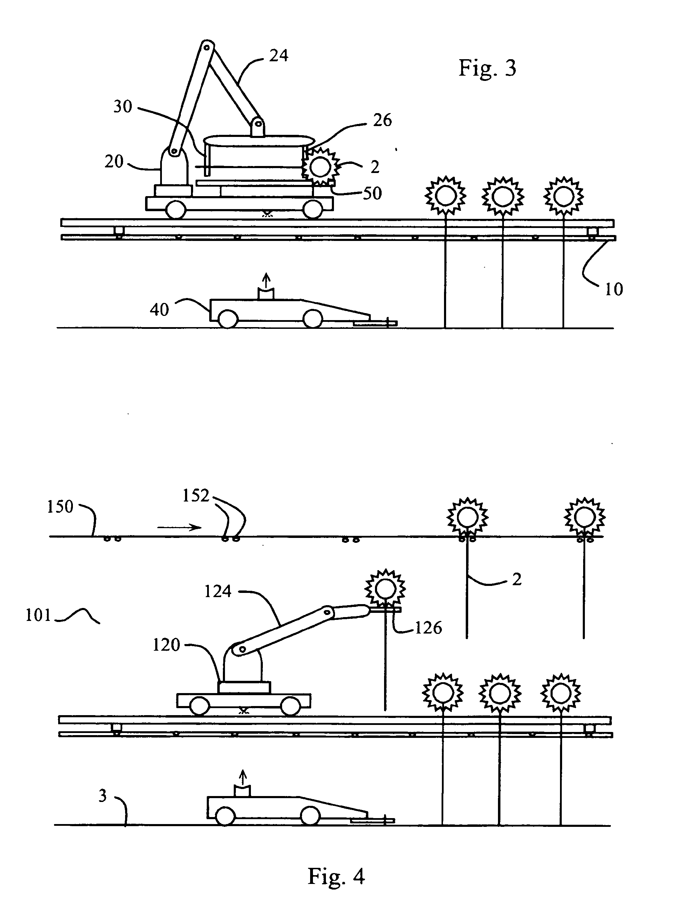

In Figure 3 is shown how the robot arm **24** moves the harvested plant **2** in order to deposit it on the conveyer belt **50.** From the position in Figure 2, the plant **2** is first pulled upwards a final distance until the cut bottom of the stem **6** is positioned above the wire mesh **10.** During this movement the first gripping element **26** and the second gripping element **30** may be moved as a whole. By articulating the robot arm **24,** the two gripping elements **26, 30** pivot around an horizontal axis relative to one another. In this way the plant **2** is deposited in a horizontal position on the conveyer belt **50.** By loosening or opening the gripping elements **26, 30** the plant **2** is deposited onto the conveyer belt **50.** The harvesting device **20** then returns to its original position to harvest the next plant. In the figure shown the plant **2** is deposited crosswise (transversely) on the conveyer belt **50** and is transported sideways. The plants may also be deposited longitudinally on the conveyer belt and transported. By depositing the plants individually on the conveyer belt **50,** they may be selected on quality in a later stage by a sorting device not shown.

Figures 1 -3 show a schematic example of the way in which an automated harvesting device **20** is used for harvesting one single chrysanthemum plant **2.** To harvest the next plant from the same row from the matrix-like wire mesh **10,** the robot arm may also be moved to the left and to the right. To start with the next row, the complete harvesting device **20** moves forwards, the wheels **22** thereby travelling over the heating pipes **14.** Because each plant **2** grows in its own opening in the wire mesh **10,** for each harvesting action the harvesting device **20** or robot arm **24** is moved a distance corresponding to the wire mesh gauge and may be easily operated by e.g. detection means that follow the wire mesh. Instead of a direct communication between the harvesting device **20** and the cutter **40,** it is also possible that the cutter **40** is directed by the same pattern of the wire mesh. To be able to function in an efficient manner, the harvesting device **20** may be provided with a number of robot arms **24** and/or gripping elements **26, 30** e.g. to harvest a single row simultaneously. This is especially favourable in combination with a cutter **40** that also cuts a complete row of stems simultaneously.

Figure 4 shows an alternative embodiment of a harvesting device **101** in which use is made of a hanging conveyer belt **150** that transports the plants **2** in a vertical orientation. The hanging conveyer belt **150** travels in the longitudinal direction alongside the bed **3** or in the aisle between two beds, and is provided with protruding fingers or pens **152** on which the flowers **4** may be suspended. The harvesting device **120** in Figure 4 is essentially identical to the versions of Figure 1 to 3 and is also provided with a robot arm **124** and a gripping element **126.** In contrast to the first embodiment, a second gripping element is not provided. The plants **2** are gripped by the gripping element **126** and moved upwards. Next, the robot arm **124** makes a rotating movement to deposit the plant **2** between the pegs **152** of the conveyer belt **150.** Such a hanging transportation is very suitable for checking the quality of the flowers in connection with e.g. an automated sorting device that removes the flowers one by one from the pens.

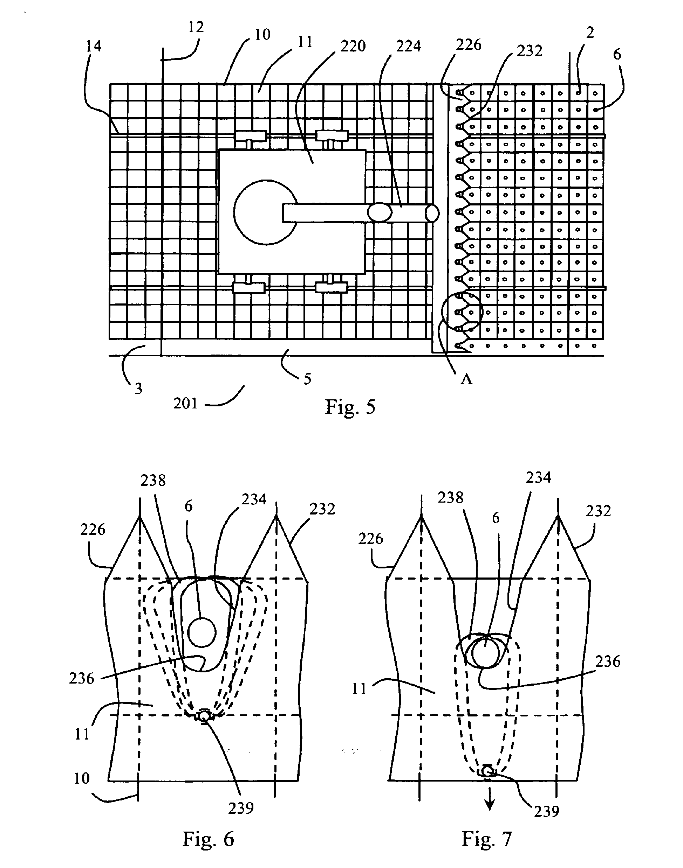

Figure 5 shows a top-view of a second alternative embodiment of the harvesting device **201** according to the invention engaged in harvesting a bed **3.** The bed **3** is planted with a number of rows of chrysanthemum plants **2** that grow through the openings **11** of the mesh wire **10,** and of which a number of rows of plants **2** have already been harvested. Also, flowers have been planted in the aisle **5,** next to the mesh wire **10.** In this view only the stems **6** are shown and it is noted that the stems **6** are not always centrally positioned in the openings **11.** The harvesting device **220** travels over the heating pipes **14** and is provided with a robot arm **224** on which a number of gripping elements **226** (e.g. fourteen) are mounted in order to be able to harvest an entire row simultaneously. Robot arm **224** functions mainly in the same manner as robot arm **24** and is not further discussed here. Each gripping element **226** is formed by two respective points **232** that are positioned a wire mesh distance away from each other and protrude forwards. A conveyer belt is not shown for reasons of clarity.

Figure 6 shows a detail of one of the gripping elements **226** according to detail **A** of Figure 5. From this figure it may be seen how a centering groove **234** is formed between each pair of points **232.** The centering groove **234** is a substantially v-shaped indentation that is open towards the front to receive a stem **6.** To harvest a row of plants the harvesting device **220** travels forwards as far as possible until the back **236** of the centering groove **234** is positioned at the center of opening **11.** At this moment the stem **6** is located somewhere in the foremost part of the opening **11** between the wire mesh **10** and the points **232.** This position is determined e.g. by means of a detector that detects the wire mesh.

The gripping element **226** is also provided with a pair of claws **238** that are arranged in a pivotal way **239.** In the open position of the gripping element **226,** the claws **238** are retracted under the points **232** in the position as indicated by the dashed line. After the harvesting device **220** has reached the center of the opening **11,** the claws **238** are closed to the position as shown in Figure 6 to receive the stem **6.** The gripping elements **226** are now in the closed position in which the stem **6** is caught between the claws **238** and the centering groove **234,** but still can move. The movement between the open position and the closed position takes place by pivoting the claws **238** around the rotation point **239.** This is effected by means of known hydraulic, pneumatic, electrical or electro/mechanical driving means (not further shown) and the like.

Figure 7 shows a detail of the same gripping element **226** as in Figure 6 in the receiving position. By moving the claws **238** in a backwards direction relative to the points **232,** the opening between the claws **238** and the centering groove **234** grows smaller. In this manner the stem **6** moves to a position between the back **236** of the centering groove **234,** where it is gripped by the claws **238.** The movement of the claws **238** to the back is also effected by means of known (not further shown) hydraulic, electrical or mechanical driving means and the like, that e.g. act on the rotation point **239.** The gripping power of the claws **238** is controlled to lift the plant **2** up without damaging the stem **6.** By means of gripping element **226,** it is ensured that the stem **6** of the plant **2** is placed centrally in the opening **11** before it is pulled upwards. In this way, damage to the plant **2** by rubbing against the wire mesh **10** during the pulling up, is reduced. A gripping element that centers the stem of a plant relative to supporting means of the wire mesh-type and subsequently grips it, is also considered as an important aspect of the invention.

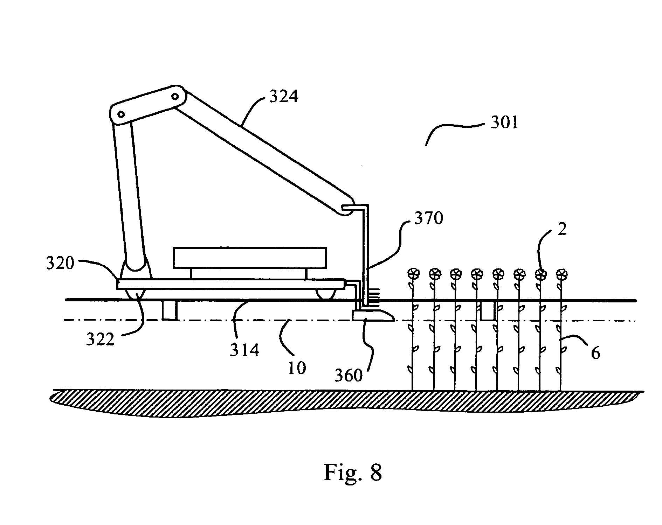

A third alternative embodiment of the harvesting device **301** is shown in the Figures 8 to 13. In Figure 8 there is shown a harvesting device **320** that travels on wheels **322** over the heating pipes **314,** just as in the other embodiments. The harvesting device **320** further carries a robot arm **324** and a transporting part **350** and is also capable of communicating with an independent cutter. In contrast to the harvesting devices **1, 101** and **201,** harvesting device **301** is equipped with a feeler part **360** that may move independently of the gripping part **370.** The gripping part **370** and the feeler part **360** are implemented multi-headed, just as in the harvesting device **220,** to be able to harvest a number of plants simultaneously. In what follows only one head of the harvesting machine **320** is described.

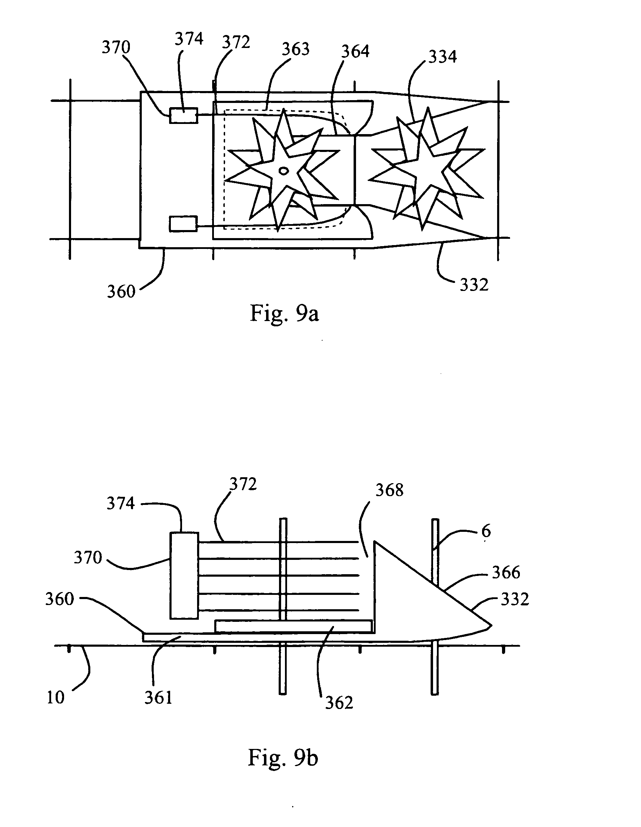

Figure 9a and 9b show respectively a top-view and a side-view of the feeler part **360** and the gripping part **370.** Feeler part **360** is mounted on the harvesting device **320** in such a manner to be able to follow the wire mesh **10.** To this end, it may also be provided with detection and lifting means not indicated, to be able to avoid e.g. the supports and the like. The feeler part **360** is provided with a number of points **332** protruding to the front whereby a centering groove **334** is formed between each of the two points **332.** Centering groove **334** is an essentially v-shaped indentation, just like in the second embodiment, open to the front to receive a stem **6** of a plant **2** during the time the feeler part moves forwards. Behind the points **332** is located a generally flat back plate **361.** The back plate **361** is provided with a square opening **363,** shown with a dashed line, corresponding to the opening in the wire mesh. From Figure 9b may also be seen that points **332** have a front **366** sloping upwards behind which is located a hollow space **368.**

In the space **368** behind the points **332** there is located a sliding plate **362** that may slide over the flat back plate **361** and may partly cover the opening **363.** Sliding plate **362** is also provided with a centering groove **364** that matches the centering groove **334.** Above the sliding plate **362** is located the gripping part **370.** Gripping part **370** consists for each head of a number of gripping fingers **372** (in this example 5 pairs) that are mounted on top of each other on a pair of pins **374.** Pins **374** are movable relative to each other by means of a pneumatic cylinder not drawn, to move the gripping fmgers **372** between an open position and a closed position. The pins **374** ensure that the gripping fingers **372** are maintained at a distance above each other to create a sufficient grip length between the lower and the upper fingers. This grip length and the height of the front **366** sloping upwards of the points **332** is chosen in such a way that the gripping fmgers **372** are confined within the space **368.**

According to an important feature of the invention, the gripping fmgers 372 are implemented elastically. By using a number of elastically gripping fingers, the grip on the stem is more gentle, such that a stem may also be bent within the grip length without breaking. The fingers are also bent towards each other at their respective ends or are claw-like, such that their capture and centering function is improved and they may be made of steel or plastic.

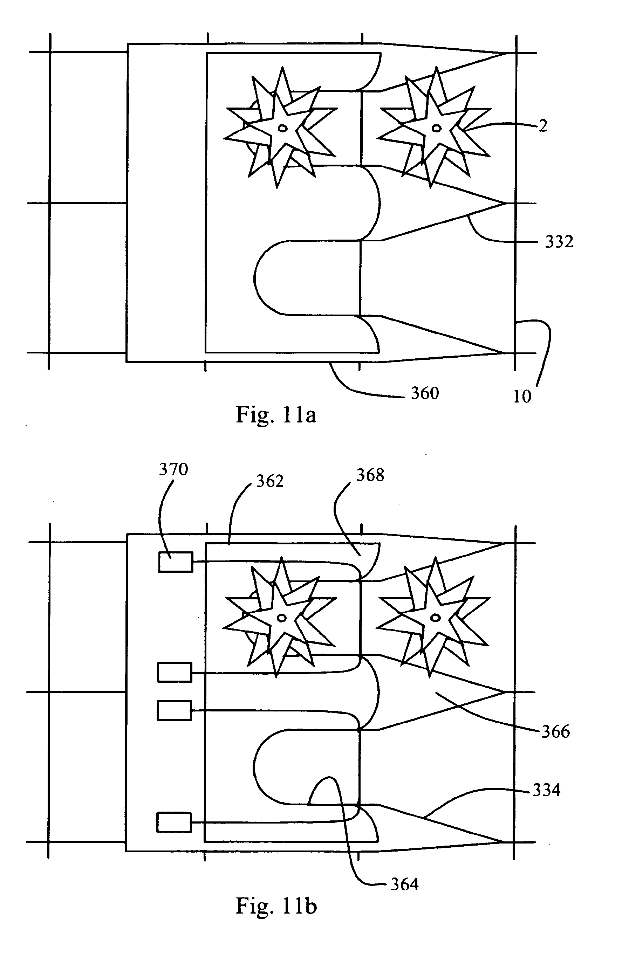

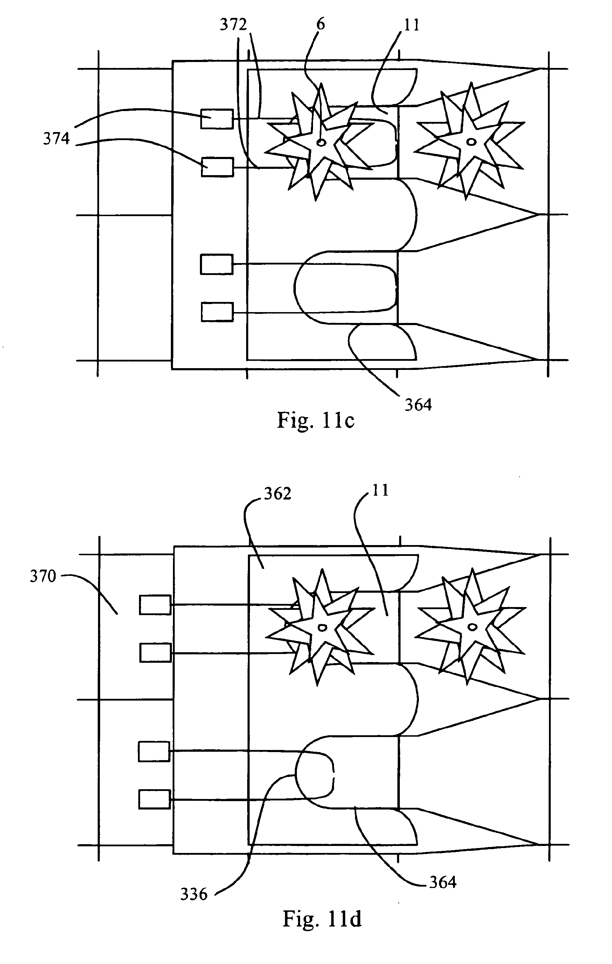

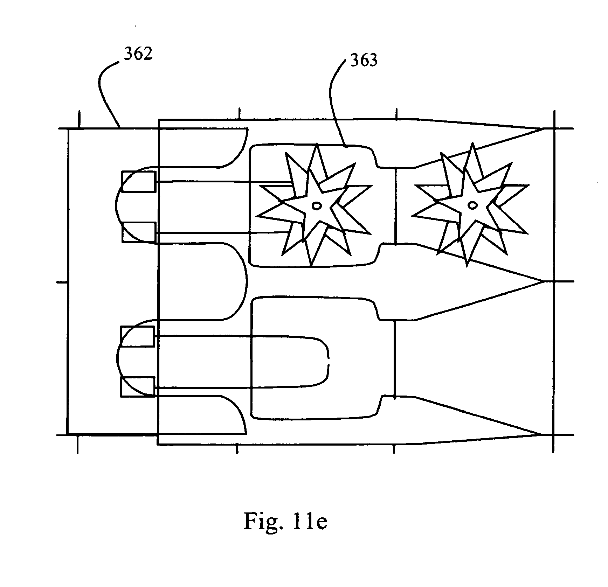

The function of the third alternative embodiment is now described by means of Figures 8 to 13. To harvest a row of plants, the harvesting device **320** is travels forwards, such that the feeler part **360** follows the wire mesh and the points **332** move between the plants **2.** Before starting to harvest, it is wise to lower the wire mesh **10** a small distance to create enough space for it. By means of electronic or mechanical detection elements not further shown, the position of the feeler part **360** relative to the wire mesh is monitored and e.g. a trigger switch takes care of the positioning on the right location above an opening (Figure 11a).

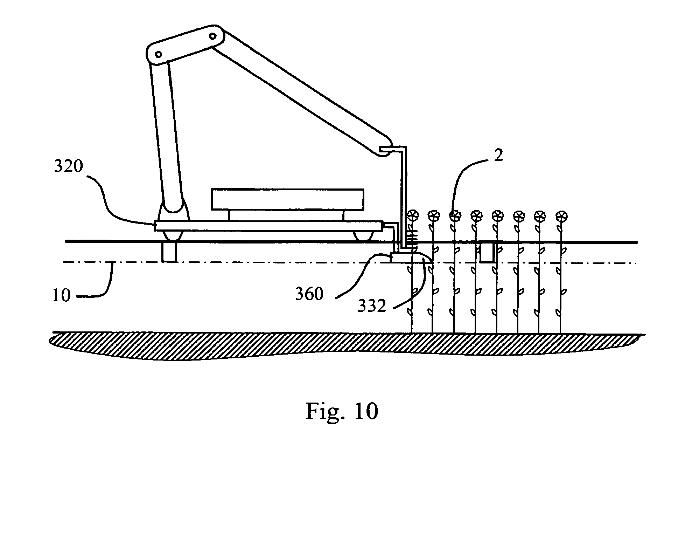

Now, the gripping part **370** is moved forwards in its open position by means of a robot arm **324** over the sliding plate **362** within the space **368** (Figure 10, 11b). By means of the centering effect of the centering grooves **334, 364** and by means of the upwards sloping front **366,** a space is created between the stems and possible branches, leaves and the like. In this way the gripping part may be moved in the position of Figure 11b without obstruction. It is also possible to move forwards the gripping part together with the searching part as a whole.

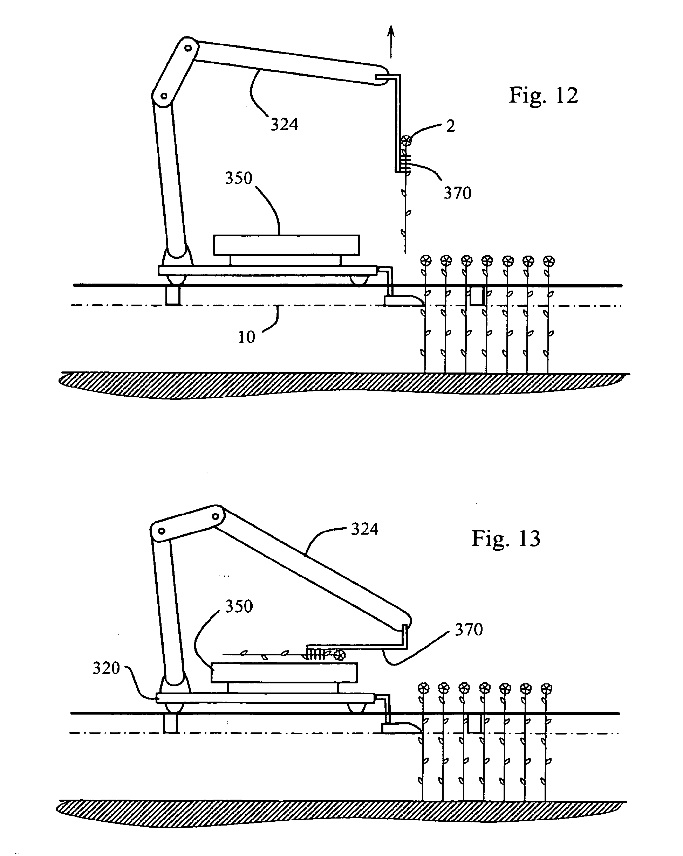

In Figure 11c the pens **374** are moved towards each other to close the gripping fmgers **372** and to receive a stem **6.** At this moment the stem **6** is located somewhere in the front part of the opening **11** between the centering groove **364** and the gripping fingers **372.** The gripping part **370** is subsequently retracted (Figure 11d) to center the stem against the back **336** of the centering groove **364** in the center of the opening **11.** After its centering function is completed, the sliding plate **362** may be moved backwards by means of known (not further indicated) hydraulic, electrical or mechanical driving means to completely clear opening 363 (Figure 11e). By means of robot arm **324** the gripping part **370** may be moved straight upwards (Figure 12) to harvest plant **2** from the wire mesh **10** and to deposit it on the transporting part **350** (Figure 13).

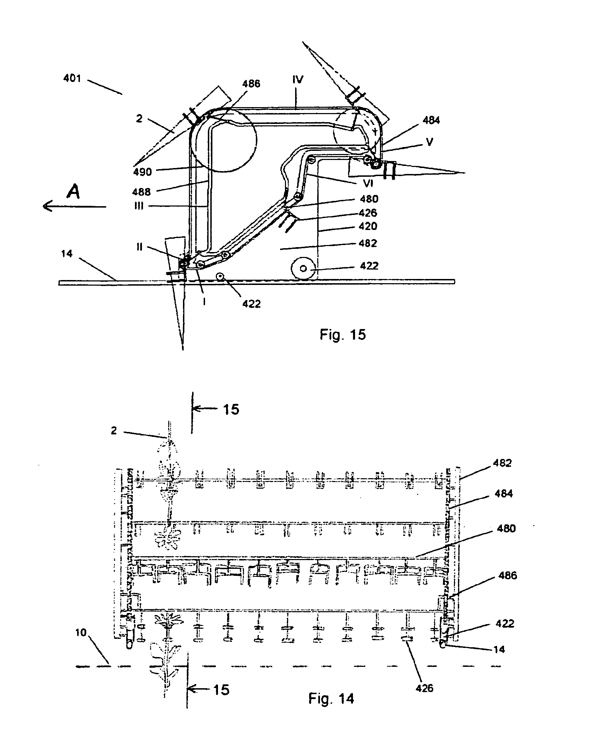

A fourth embodiment of the harvesting device **401** according to the invention is described by means of Figures 14 and 15. According to this fourth embodiment, the plants **2** (of which only a few are drawn) are harvested in a continuous process, as a result of which a higher harvesting rate may be achieved. In this embodiment the grippers are largely the same as in the previous embodiments and will not be described further. Figure 14 shows a front-view of a harvesting device **420** that travels over the heating pipes 14 by means of wheels **422.** A number of gripping elements **426** (e.g. 10) are mounted rotationally-fixed on a gripping beam **480.** The gripping beams **480** are supported at their respective ends by chains **484** and may rotate freely around their axes with respect to the chains **484.** The chains **484** are supported by means of gearwheels **490** from side plates **482.** The chains **484** may be driven by means of driving means not indicated. Each gripping beam **480** is provided with two reaction arms **486** that are described in detail below. Of course, it is possible to use belts or other driving means instead of chains.

Figure 15 shows a cross section of the harvesting device **420** from Figure 14 along the plane **15-15** whereby the pattern of movement of the chain **484** and the gripping beams **480** may be seen. From the figure, it may be seen that five gripping beams **480** are mounted on the chain **484,** but other numbers are of course also possible. Each side plate **482** is provided with a reaction groove **488** in which the reaction arm **486** can move. Each reaction arm **486** is fixed to its respective gripping beam **480** and determines thereby the orientation of the gripping beam **480.** By determining the path of the reaction groove **488** with respect to the chain **484,** at any moment during the cycle, the position of the gripping beams **480** may be determined.

The movement of the gripping beam **480** during the forwards travelling **A** of the harvesting device **420** is now described by means of Figure 15. In a first phase I, a gripping beam **480** is positioned just above the wire mesh **10,** such that the gripping elements **426** grip the stems of the plants **2.** The actuation of the gripping movement is realised by means of (not further described) hydraulic, electrical or mechanical driving means and the like, mounted on the gripping beam **480.** In a second phase II, the chain **484** travels rearwards, such that the centering of the plants with respect to the wire mesh **10** may be effected. In a third phase III the plant **2** is pulled upwards from the wire mesh **10** with a lifting movement. This movement of the chain may also be effected slightly inclined rearwardly. In a fourth phase IV the gripping beam **480** and the plants **2** gripped thereby are rotated in three movements by 270 degrees. In a fifth phase V the gripping elements **426** are opened, such that the plants 2 are deposited onto a transporting part not further indicated. In a sixth phase VI the gripping beam **480** moves back to its starting position with open gripping elements.

Although a number of embodiments are described herein, modifications thereof and other similar devices and methods will also fall within the framework of the invention. The scope of the patent protection is determined by the claims as indicated hereafter.

## Claims

1. Device for harvesting a long-stemmed crop (2) that is supported at its stem by supporting means (10), comprising :
a gripper (26) for gripping the stem above the supporting means; and
lifting means (24) for pulling the crop upwards through the supporting means over essentially its supported length.

2. Device according to claim 1, further comprising centering means (234) for centering the gripper or the stem relative to an opening (11) in the supporting means.

3. Device according to claim 2, wherein the centering means comprises a sliding element (238) and wherein the sliding element and the gripper are adjustable relative to each other to center the stem or the gripper.

4. Device according to any one of the preceding claims, wherein the gripper supports the stem over a grip length in order to avoid breaking the stem during a change in orientation of the crop.

5. Device according to claim 4, wherein the gripper comprises a number of gripping elements distributed over the grip length, that grip the stem of the crop.

6. Device according to claim 5, wherein each gripping element comprises a pair of elastic gripping fingers (372).

7. Device according to claim 6, wherein the gripping fingers of a gripping element may be movable relative to each other to grip a stem.

8. Device according to any one of the preceding claims, further comprising tilting means (25) for rotation of the gripper around an essentially horizontal axis.

9. Device according to any one of the preceding claims, further comprising a cutting device (40) for cutting the stem.

10. Device according to claim 9, wherein the cutting device is positioned above the supporting means and the stem is cut at a distance from the gripper corresponding essentially to the supported distance.

11. Device according to claim 9, wherein the cutting device is positioned underneath the supporting means and the stem is cut just above the ground before the crop is pulled upwards.

12. Device according to claim 11, further comprising a communication unit (28, 42) to provide for remote communication between the harvesting device and the cutting device.

13. Device according to any one of the preceding claims, further comprising driving means (22), such that the device is mobile.

14. Device according to any one of the preceding claims, further comprising a guidance system for adjustable height guidance of at least the gripper.

15. Device according to any one of the preceding claims, further comprising a number of grippers (226) for the simultaneous gripping of a number of plants.

16. Method for the automated harvesting of long-stemmed crops that are supported at a distance d from the ground by supporting means (10), comprising :
centering the stem (6) of one of the crops to harvest, relative to an opening (11) in the supporting means ;
gripping the stem above the supporting means ; and
pulling upwards the crop over essentially a distance d.

17. Gripping head for gripping the stem of a long-stemmed crop to be harvested which is supported at its stem by supporting means (10), and for centering the stem relative to the centre of openings (11) formed by the supporting means, the gripping head comprising :
an entry part with an opening for entry of the stems ;
a centering part contiguous with the entry part to center the stems in a first direction ;
a gripping part comprising a pair of gripping fingers (372) that are adjustable relative to each other from an open position wherein the centering part is in an open position to receive the stem, and a closed position ; and
driving means to move the centering part to center the stem essentially in the center of the opening formed by the supporting means.

18. Gripping head according to claim 17, wherein at least a part of the centering part (362) is movable relative to the entry part, to clear the support plane after centering the stem.

19. Gripping head according to claim 17 or claim 18, further comprising a number of gripping fingers (372) positioned above each other, that supports the stem in a closed position over a such a grip length without breaking of the stem, in order to effect a change in the orientation of the crop.

20. Gripping head according to any one of claims 17 to 19, wherein the gripping fingers in the open position are shielded off by the entry part.

21. Device according to any one of claims 17 to 20, wherein the fingers are bent springs.

22. Gripping head according to any one of claims 17 to 21, further comprising detectors to detect the position of the gripping head relative to the opening formed by the supporting means.

## Patentansprüche

1. Vorrichtung zum Ernten einer langstieligen Anbaupflanze (2), die dabei an ihrem Stiel mittels einer Haltevorrichtung (10) gehalten wird, mit:
einem Greifer (26) zum Greifen des Stiels über der Haltevorrichtung; und
einer Hubvorrichtung (24), um die Anbaupflanze über im Wesentlichen ihre gehaltene Länge durch die Haltevorrichtung hindurch nach oben zu ziehen.

2. Vorrichtung nach Anspruch 1, ferner mit einer Zentriervorrichtung (234) zum Zentrieren des Greifers oder des Stiels relativ zu einer in der Haltevorrichtung ausgebildeten Öffnung (11).

3. Vorrichtung nach Anspruch 2, bei der die Zentriervorrichtung ein Gleitelement (238) aufweist und bei der das Gleitelement und der Greifer relativ zueinander ausrichtbar sind, um den Stiel oder den Greifer zu zentrieren,

4. Vorrichtung nach einem der vorhergehenden Ansprüche, bei der der Greifer den Stiel über eine Greiflänge hinweg hält, um ein Brechen des Stiels während einer Veränderung der Ausrichtung der Anbaupflanze zu verhindern.

5. Vorrichtung nach Anspruch 4, bei der der Greifer eine Anzahl über die Greiflänge hinweg verteilter Greifelemente aufweist, die den Stiel der Anbaupflanze greifen.

6. Vorrichtung nach Anspruch 5, bei der jedes Greifelement ein Paar elastischer Greiffinger (372) aufweist.

7. Vorrichtung nach Anspruch 6, bei der die Greiffinger eines Greifelements relativ zueinander bewegbar sind, um einen Stiel zu greifen.

8. Vorrichtung nach einem der vorhergehenden Ansprüche, mit einer Kippvorrichtung (25) zum Drehen des Greifers um eine im Wesentlichen horizontale Achse.

9. Vorrichtung nach einem der vorhergehenden Ansprüche, ferner mit einer Schneidvorrichtung (40) zum Schneiden des Stiels,

10. Vorrichtung nach Anspruch 9, bei der die Schneidvorrichtung über der Haltevorrichtung positioniert ist und der Stiel in einem Abstand von dem Greifer geschnitten wird, der im Wesentlichen der Halte-Länge entspricht.

11. Vorrichtung nach Anspruch 9, bei der die Schneidvorrichtung unter der Haltevorrichtung positioniert ist und der Stiel direkt über dem Boden geschnitten wird, bevor die Anbaupflanze nach oben gezogen wird.

12. Vorrichtung nach Anspruch 11, ferner mit einer Kommunikationseinheit (28,42) zur Ermöglichung von Fernkommunikation zwischen der Erntevorrichtung und der Schneidvorrichtung.

13. Vorrichtung nach einem der vorhergehenden Ansprüche, ferner mit einer derartigen Antriebsvorrichtung (22), dass die Vorrichtung mobil ist.

14. Vorrichtung nach einem der vorhergehenden Ansprüche, ferner mit einem Führungssystem zur einstellbaren Höhenführung mindestens des Greifers.

15. Vorrichtung nach einem der vorhergehenden Ansprüche, ferner mit mehreren Greifern (226) zum gleichzeitigen Greifen mehrerer Pflanzen.

16. Verfahren zum automatischen Ernten langstieliger Anbaupflanzen, die mittels einer Haltevorrichtung (10) in einem Abstand d vom Boden gehalten werden, mit folgenden Schritten;
Zentrieren des Stiels (6) einer der zu erntenden Anbaupflanzen relativ zu einer in der Haltevorrichtung ausgebildeten Öffnung (11);
Greifen des Stiels über der Haltevor-richtung; und
Ziehen der Anbaupflanze nach oben im Wesentlichen über den Abstand d.

17. Greifkopf zum Greifen des Stiels einer zu erntenden langstieligen Anbaupflanze, die an ihrem Stiel mittels einer Haltevorrichtung (10) gehalten wird, und zum Zentrieren des Stiels relativ zu der Mitte von Öffnungen (11), die in der Haltevorrichtung ausgebildet sind, wobei der Greifkopf aufweist:
einen Eintrittsteil mit einer Öffnung für den Eintritt der Stiele;
einem an den Eintrittsteil angrenzenden Zentrierteil zum Zentrieren der Stiele in einer ersten Richtung;
einem Greifteil mit einem Paar von Greiffingern (372), die relativ zueinander zwischen einer offenen Position, in der das Zentrierteil zwecks Aufnahme des Stiels geöffnet ist, und einer geschlossenen Position einstellbar sind; und
einer Antriebsvorrichtung zum Bewegen des Zentrierteils derart, dass es den Stiel im Wesentlichen im Zentrum der Öffnung zentriert.

18. Greifkopf nach Anspruch 17, bei dem mindestens ein Teil des Zentrierteils (362) relativ zu dem Eintrittsteil bewegbar ist, um die Halteebene nach dem Zentrieren des Stengels freizulegen.

19. Greifkopf nach Anspruch 17 oder Anspruch 18, ferner mit einer Anzahl übereinander positionierter Greiffinger (372), die, um eine Änderung der Ausrichtung der Anbaupflanze zu bewirken, in einer geschlossenen Position den Stiel über eine derartige Greiflänge hinweg halten, dass der Stiel nicht gebrochen wird.

20. Greifkopf nach einem der Ansprüche 17 bis 19, bei dem die Greiffinger in der offenen Position von dem Eintrittsteil abgeschirmt sind.

21. Greifkopf nach einem der Ansprüche 17 bis 20, bei dem die Finger gekrümmte Federn sind.

22. Greifkopf nach einem der Ansprüche 17 bis 21, ferner mit Detektoren zum Detektieren der Position des Greifkopfs relativ zu der in der Haltevorrichtung ausgebildeten Öffnung.

## Revendications

1. Dispositif de récolte de culture à longue tige (2) qui est supportée au niveau de sa tige par des moyens de support (10), comprenant :
une pince (26) destinée à saisir la tige au-dessus des moyens de support ; et
des moyens de levage (24) destiné à tirer vers le haut la culture à travers les moyens de support essentiellement sur leur longueur supportée.

2. Dispositif selon la revendication 1, comprenant en outre des moyens de centrage (234) destinés à centrer la pince ou la tige par rapport à l'ouverture (11) dans les moyens de support.

3. Dispositif selon la revendication 2, dans lequel les moyens de centrage comprennent un élément coulissant (238), et dans lequel l'élément coulissant et la pince sont réglables l'un par rapport à l'autre de façon à centrer la tige ou la pince.

4. Dispositif selon l'une quelconque des revendications précédentes, dans lequel la pince soutient la tige sur une longueur de saisie afin d'éviter de casser la tige pendant un changement d'orientation de la culture.

5. Dispositif selon la revendication 4, dans lequel la pince comprend un certain nombre d'éléments de pinçage répartis sur la longueur de saisie, qui saisissent la tige de la culture.

6. Dispositif selon la revendication 5, dans lequel chaque élément de pinçage comprend une paire de doigts élastiques de serrage (372).

7. Dispositif selon la revendication 6, dans lequel les doigts de serrage d'un élément de pinçage peuvent être mobiles les uns par rapport aux autres de façon à saisir une tige.

8. Dispositif selon l'une quelconque des revendications précédentes, comprenant en outre des moyens d'inclinaison (25) destinés à la rotation de la pince autour d'un axe sensiblement horizontal.

9. Dispositif selon l'une quelconque des revendications précédentes, comprenant en outre un dispositif de coupe (40) destiné à couper la tige.

10. Dispositif selon la revendication 9, dans lequel le dispositif de coupe est placé au-dessus des moyens de support et la tige est coupée à une distance de la pince correspondant sensiblement à la distance de support.

11. Dispositif selon la revendication 9, dans lequel le dispositif de coupe est placé sous les moyens de support et la tige est coupée juste au-dessus de la surface du sol avant que la culture ne soit tirée vers le haut.

12. Dispositif selon la revendication 11, comprenant en outre une unité de communication (28, 42) destinée à fournir une communication à distance entre le dispositif de récolte et le dispositif de coupe.

13. Dispositif selon l'une quelconque des revendications précédentes, comprenant en outre des moyens de déplacement (22) de telle sorte que le dispositif soit mobile.

14. Dispositif selon l'une quelconque des revendications précédentes, comprenant en outre un système de guidage destiné au pilotage de la hauteur réglable de la pince la plus basse.

15. Dispositif selon l'une quelconque des revendications précédentes, comprenant en outre un certain nombre de pinces (226) de façon à saisir de manière simultanée un certain nombre de plantes.

16. Procédé de récolte automatisée de cultures à longue tige qui sont supportées à une distance d de la surface du sol par des moyens de support (10), comprenant :
le centrage de la tige (6) d'une des cultures à cueillir, par rapport à une ouverture (11) dans les moyens de support ;
la saisie de la tige au-dessus des moyens de support ; et
le tirage vers le haut de la culture essentiellement sur une distance d.

17. Tête de pince destinée à saisir la tige d'une culture à longue tige pour être récoltée laquelle est supportée au niveau de sa tige par un moyen de support (10) et à centrer la tige par rapport au centre de l'ouverture (11) formée par les moyens de support, la tête de pince comprenant :
une portion d'entrée avec une ouverture pour faire pénétrer les tiges ;
une portion de centrage contiguë à la partie d'entrée pour centrer les tiges dans une première direction ;
une portion de saisie comprenant une paire de doigts de serrage (372) pouvant être réglés l'un par rapport à l'autre à partir d'une position d'ouverture, dans laquelle la partie de centrage est en position ouverte pour recevoir la tige, et en position fermée ; et
des moyens de déplacement destinés à déplacer la partie de centrage pour centrer la tige sensiblement au centre de l'ouverture formée par le moyen de support.

18. Tête de pince selon la revendication 17, dans laquelle au moins une partie de la partie de centrage (362) est mobile par rapport à la partie d'entrée, de façon à libérer le plan de support après le centrage de la tige.

19. Tête de pince selon la revendication 17 ou la revendication 18, comprenant en outre un certain nombre de doigts de serrage (372) placés les uns au-dessus des autres, qui supportent la tige en position fermée sur une telle longueur de saisie sans casser la tige, afin d'effectuer un changement de l'orientation de la culture.

20. Tête de pince selon l'une quelconque des revendications 17 à 19, dans laquelle les doigts de serrage en position ouverte sont protégés par la portion d'entrée.

21. Dispositif selon l'une quelconque des revendications 17 à 20, dans laquelle les doigts sont des ressorts déformés.

22. Tête de pince selon l'une quelconque des revendications 17 à 21, comprenant en outre des détecteurs destinés à détecter la position de la tête de pince par rapport à l'ouverture formée par les moyens de support.
